# EUROPÄISCHE PATENTSCHRIFT

(11) **EP 0 988 199 B1**
(45) Veröffentlichungstag und Bekanntmachung des Hinweises auf die Patenterteilung: **31.10.2001**
(21) Anmeldenummer: 98939501.7
(22) Anmeldetag: 15.06.1998
(51) Int. Cl.: B60T 7/10, B60T 11/04, F16C 1/22

(54) **SEILZUGEINSTELLUNG**
CABLE PULL ADJUSTING DEVICE
DISPOSITIF DE REGLAGE DE TIRANT A CABLE

(30) Priorität: 17.06.1997 DE 29710547 U
(43) Veröffentlichungstag der Anmeldung: 29.03.2000
(73) Patentinhaber: AL-KO KOBER AG, D-89359 Kötz (DE)
(72) Erfinder: RAMPP, Armin, D-86513 Ursberg-Bayersried (DE)
(74) Vertreter: Ernicke, Hans-Dieter, Dipl.-Ing.
(86) Internationale Anmeldenummer: EP9803581
(87) Internationale Veröffentlichungsnummer: WO9857832

(56) Entgegenhaltungen:
- EP-A- 0 478 725
- DE-A- 4 119 241
- DE-U- 9 405 849
- DE-U- 29 600 996

## Beschreibung

Die Erfindung betrifft eine Seilzugeinstellung mit den Merkmalen im Oberbegriff des Hauptanspruchs.

Eine solche Seilzugeinstellung ist aus der WO 95/27642 bekannt. Sie besteht aus einem mit dem Handbremshebel verbundenen beweglichen Klemmgehäuse, in dem eine mit einem Seilzug verbundene Zugstange und ein Klemmstück beweglich geführt sind. Die Zugstange und das Klemmstück sind mit einem Rastgesperre versehen und werden beim Spannen des Seilzugs über eine Keilführung in Eingriff miteinander gebracht. Das Klemmstück wird dabei seitlich auf die Zugstange hinbewegt. Zum Öffnen ist eine Löseeinrichtung vorgesehen. Hierbei wird das Klemmgehäuse gegen einen Anschlag bewegt, an dem das Klemmstück zur Anlage kommt und dabei durch eine entgegengerichtete Verschiebung außer Eingriff mit der Zugstange gerät. Hierbei kann durch eine entsprechende Wahl des Anschlagpunktes und einer auf das Klemmstück einwirkenden Feder ein Kippmoment erzeugt werden, das zur Keilführung hin gerichtet ist.

Die EP-A-0 478 725 zeigt eine andere Seilzugeinstellung, die in den Seilzug integriert ist und mit der die Hülle des Seilzugs federnd gespannt wird. Hierbei ist die Hülle mit einer Zahnhülse verbunden, die in einem ortsfest angeordneten Gehäuse beweglich geführt und über einen Konusring mit innenliegenden Zähnen gespannt werden kann. Die Seele des Seilzugs ist durch die Seilzugeinstellung hindurchgeführt und über einen Hebel und eine Steuereinrichtung mit einem Bremspedal oder einem Handbremshebel verbunden. Bei Betätigung des Handbremshebels wird die Steuereinrichtung aktiviert, die über ein zusätzliches Steuerkabel die Seilzugeinstellung von außen betätigt und die Seilzughülle arretiert.

Es ist Aufgabe der vorliegenden Erfindung, die Seilzugeinstellung noch weiter zu verbessern und die Betriebssicherheit zu erhöhen.

Die Erfindung löst diese Aufgabe mit den Merkmalen im Hauptanspruch.
Zwischen dem Klemmstück und dem Klemmgehäuse ist eine Zwangsführung vorgesehen, die beim Lösen des Rastgesperres zusätzlich zur Löseeinrichtung wirkt und das Klemmstück von der Zahnstange wegbewegt. Dadurch wird die Betriebssicherheit wesentlich erhöht und auch unter ungüstigen Umgebungsbedingungen gewährleistet.

Die Zwangsführung wirkt vorzugsweise formschlüssig und kann in beliebiger Weise ausgebildet sein. Die bevorzugte Ausrührungsform hat den Vorteil einer kleinen Baugröße und eines geringen Bauaufwandes. Außerdem kann durch diese Anordnung das Klemmstück im demontierten Zustand der Seilzugeinstellung besser und unverlierbar am Klemmgehäuse gehalten sein.

In den Unteransprüchen sind vorteilhafte Ausgestaltungen der Erfindung angegeben.

Die Erfindung ist in den Zeichnungen beispielsweise und schematisch dargestellt. Im einzelnen zeigen:
- Figur 1:: eine Seilzugeinstellung mit einer Zwangsführung zwischen Klemmgehäuse und Klemmstück in einem Querschnitt,
- Figur 2:: eine geklappte Seitenansicht der Seilzugeinstellung von Figur 1,
- Figur 3:: eine Feststellbremse mit einer Seilzugeinstellung in Seitenansicht und
- Figur 4:: die Feststellbremse von Figur 3 in Draufsicht.

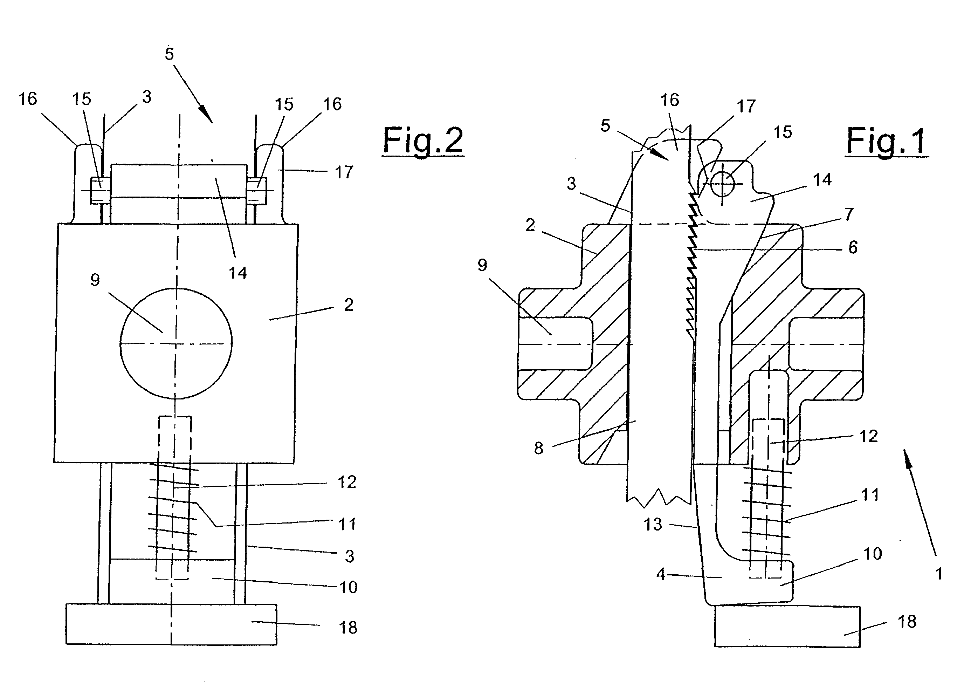

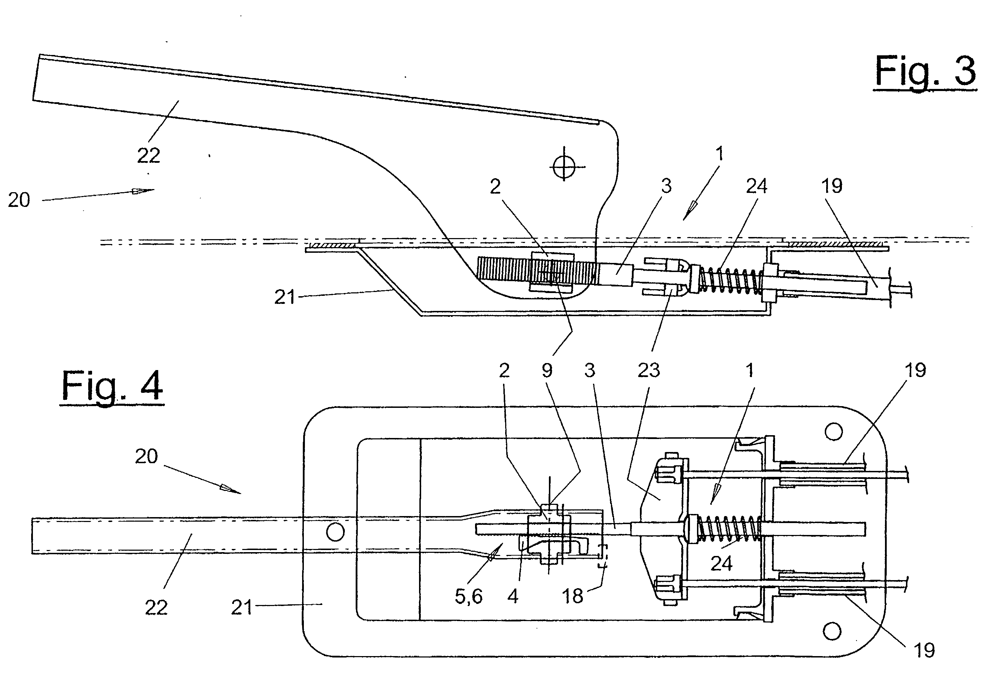

Figur 1 und 2 zeigen eine Seilzugeinstellung (1) in Teilen. Sie ist z.B. verbunden mit einer Feststellbremse (21) gemäß Figur 3 und 4.

Die Feststellbremse (21) und die Seilzugeinstellung (1) entsprechen im Grundaufbau der Anordnung aus der WO 95/27642. Die Seilzugeinstellung (1) ist in der nachfolgend beschriebenen Weise gegenüber dieser bekannten Bauform modifiziert.

Die Feststellbremse (21) besteht z.B. aus einem schwenkbar an einem Gestell (21) gelagerten Handbremshebel, der über die Seilzugeinstellung (1) mit ein oder mehreren Seilzügen (19) verbunden ist. Der Handbremshebel (22) kann die bekannten Betätigungseinrichtungen mit Zahnbogen, Sperre und Druckknopf aufweisen, mit denen er in den jeweils gewünschten Stellungen gehalten werden kann. Im gezeigten Ausführungsbeispiel sind zwei nebeneinander liegende Seilzüge (19) vorhanden, die über einen Waagbalken zum Bremsausgleich miteinander verbunden sind. Am Waagbalken (23) greift ein zur Seilzugeinstellung (1) gehöriges Zugelement (3), vorzugsweise eine Zugstange, an. Die Zugstange (3) prägt am rückwärtigen Ende eine Feder (24), die sich am Gestell (21) abstützt) und die Zustange (3) unter Spannung der Seilzüge (19) nach vorn zum Handbremshebel (22) hintreibt. Die Seilzüge (19) sind am rückwärtigen Ende mit Radbremsen (nicht dargestellt) verbunden.

Die Seilzugeinstellung (1) hat wie in der WO 95/27642 den Zweck, den Bremsverschleiß und das Spiel in den Seilzügen (19) aufzunehmen. Zu diesem Zweck wird in Ruhestellung des Handbremshebels (22) die Seilzugeinstellung (1) gelöst. Die Feder (4) kann dann die Seilzüge (19) straffen. In Spannstellung wird bei Anziehen des Handbremshebels (22) die Seilzugstellung geschlossen und gespannt, wobei die am Handbremshebel (22) angreifenden Handkräfte über die Seilzugeinstellung auf die Seilzüge (19) und die Radbremsen übertragen werden.

Die Seilzugeinstellung (1) besteht zumindest aus einem Klemmgehäuse (2) mit einem innenliegenden Hohlraum (8), in dem ein Klemmstück (4) axial beweglich mit einem begrenzten Bewegungsspielraum geführt und gehalten ist. Außerdem erstreckt sich durch den Hohlraum (8) parallel zum Klemmstück (4) die Zugstange (3), die an einem Ende mit dem Seilzug (19) bzw. dem Waagbalken (23) verbunden ist. Zwischen der Zugstange (3) und dem Klemmstück (4) ist an den einander zugekehrten Seitenflächen ein Rastgesperre (6), vorzugsweise in Form einer Verzahnung, insbesondere einer Sägeverzahnung mit flacheren und steileren Flankenwinkeln, vorgesehen. Dadurch ergibt sich eine vorzugsweise einseitige Rastverbindung. An den gegenüberliegenden und vorzugsweise glatten, geraden Seiten sind das Klemmstück (4) und die Zugstange (3) im Klemmgehäuse längsbeweglich geführt.

Das Klemmstück (4) hat am oberen Ende einen verbreiterten Kopf (14) mit einer schrägen Außenseite, die zusammen mit einer entsprechend geneigten Abschrägung der Hohlrauminnenwand eine Keilführung (7) für das Klemmstück (4) bildet. Über die Keilführung (7) wird das Klemmstück (4) bei der in Figur 1 abwärts gerichteten Spannbewegung zu der benachbarten Zugstange (3) hinbewegt, wobei das Rastgesperre (6) in Eingriff kommt.

Am unteren Ende besitzt das Klemmstück (4) einen winkelförmigen Ansatz (10), der mit einer Feder (11) zusammenwirkt, die sich an der Unterseite des Klemmgehäuses (2) abstützt und das Klemmstück (4) nach unten zu schieben trachtet. Die Feder (11) kann auf einem Stift (12) gelagert und geführt sein. Unterhalb des Klemmstücks (4) ist noch ein vorzugsweise stationär angeordneter Anschlag (18) vorgesehen, der in der nachfolgend beschriebenen Weise zum Lösen der Seilzugeinstellung und des Rastgesperres (6) dient.

Zwischen dem Klemmgehäuse (2) und dem Klemmstück (4) ist eine Zwangsführung (5) vorgesehen, die vorzugsweise formschlüssig ausgebildet ist. Sie dient dazu, das Klemmstück (4) beim Lösen des Rastgesperres (6) zuverlässig in Richtung zur Keilführung (7) hin zu bewegen.

Die Zwangsführung kann in beliebiger Weise ausgestaltet sein. Im gezeigten Ausführungsbeispiel besteht sie aus ein oder mehreren vorstehenden nasenartigen Führungsansätzen (16), die mit einem Führungsstift (15) zusammenwirken. Der Führungsstift (15) wird an einer schrägen Leitfläche (17) der Führungsansätze (16) entlanggeführt und dabei in Richtung auf die Keilführung (7) bewegt.

Im gezeigten Ausführungsbeispiel sind die Führungsansätze (16) am Klemmgehäuse (2) mit Abstand angeordnet und erstrecken sich axial entlang der Ränder des Hohlraumes (8). Sie bilden dadurch eine Führungsgabel und lassen zwischen sich einen Freiraum, in dem sich der Kopf (14) des Klemmstücks (4) und die Zugstange (3) ungehindert bewegen können.

Der Führungsstift (15) steckt quer zur Bewegungsrichtung im Kopf (14) des Klemmstücks (4) und ragt über diesen beidseits ein Stück vor. Mit diesen Überständen ist er an den schrägen Leitflächen (17) der Führungsansätze (16) geführt. Außerdem verhindern die beidseitigen Stiftüberstände, daß das Klemmstück (4) unter der Wirkung der Feder (11) in der Demontagestellung und bei fehlender Zugstange (3) in den Hohlraum (8) gezogen werden kann. Der Führungsstift (15) kann drehbar gelagert sein oder an den vorstehenden Enden drehbare Rollen aufweisen.

Die schrägen Leitflächen (17) erstrecken sich vorzugsweise im wesentlichen parallel zur gegenüberliegenden Keilführung (7). Dabei sind aber auch Winkelabweichungen möglich. Die gezeigten offenen Leitflächen (17) können auch Rinnen oder Kurvenbahnen sein.

Zum Spannen der Seilzugeinstellung (1) werden die Spannkräfte über das Klemmgehäuse (2) auf die Zugstange (3) eingeleitet. Hierzu wird das Klemmgehäuse (2) durch den Handbremshebel (22) oder durch ein anderes geeignetes Organ bewegt. Das Klemmgehäuse (2) kann über ein Lager (9) schwenkbar gelagert sein. Bei dieser in Figur 1 nach oben gerichteten Spannbewegung wird das Klemmgehäuse (2) vom Anschlag (18) entfernt, wodurch das Klemmstück (4) unter der Wirkung der Feder (11) nach unten bewegt und über die Keilführung (7) zugleich nach links zur Zugstange (3) hin verschoben wird. Dadurch kommt das Rastgesperre (6) in Eingriff.

Zum Lösen des Seilzugs wird die Seilzugeinstellung (1) in Gegenrichtung nach unten zum Anschlag (18) hin bewegt. Das Klemmstück (4) kommt am Anschlag (18) zur Anlage, wodurch es durch die Kraft der Feder (11) relativ zum Klemmgehäuse (2) nach oben bewegt wird. Dabei gelangt der Führungsstift (15) in Kontakt mit den schrägen Leitflächen (17) und wird von diesen schräg nach außen und in Richtung zur Keilführung (7) hin bewegt. Dadurch erhält das Klemmstück (4) eine definierte Seitenbewegung, mit der das Rastgesperre (6) gelöst wird.

Die Seitenbewegung kann zusätzlich noch durch ein Kippmoment unterstützt werden. Das Kippmoment entsteht durch einen seitlichen Versatz der Wirkungslinie der Feder (11) und der Anschlagstelle zwischen Ansatz (10) und Anschlag (18). Die Federlinie liegt weiter außen als die Anschlagstelle, wodurch über die Federkraft ein rechtsdrehendes Kippmoment entsteht, das den Kopf (14) zur Keilführung (7) hin bewegt.

Abwandlungen der gezeigten Ausführungsform sind in verschiedener Weise möglich. So kann zum einen die Anordnung der Führungsansätze und des Führungsstiftes vertauscht werden. Außerdem können entsprechende Leitflächen oder sonstige formschlüssige Zwangsführungsorgane auch in anderer Ausbildung, z.B. als Kurbel- oder Hebeltrieb oder dgl. vorhanden und an anderen Stellen zwischen Klemmstück (4) und Klemmgehäuse (2) angeordnet sein. Die gezeigte Seilzugeinstellung (1) ist auch für andere Bremseinrichtungen geeignet. Das Klemmgehäuse (2) kann dazu mit einem beliebten anderen und entsprechend ausgebildeten Betätigungsorgan, z.B. einem Pedal, einem weiteren Seilzug oder dergleichen, verbunden sein. In weiterer Abwandlung kann das Zugelement (3) anders ausgebildet sein. Zudem kann die kinematische Zuordnung von Klemmgehäuse/Zugelement zum Betätigungsorgan (22)/Seilzug vertauscht sein.

### BEZUGSZEICHENLTSTE

- 1: Seilzugeinstellung
- 2: Klemmgehäuse
- 3: Zugstange
- 4: Klemmstück
- 5: Zwangsführung
- 6: Rastgesperre, Verzahnung
- 7: Keilführung
- 8: Hohlraum
- 9: Lager
- 10: Ansatz
- 11: Feder
- 12: Stift
- 13: Steg
- 14: Kopf
- 15: Führungsstift
- 16: Führungsansatz
- 17: Leitfläche
- 18: Anschlag
- 19: Seilzug
- 20: Feststellbremse
- 21: Gestell
- 22: Handbremshebel
- 23: Waagbalken
- 24: Feder

## Patentansprüche

1. Seilzugeinstellung bestehend aus einem mit einem Betätigungsorgan (22) verbundenen beweglichen Klemmgehäuse (2), in dem ein mit mindestens einem Seilzug verbundenes Zugelement (3) und ein Klemmstück (4) beweglich geführt sind, wobei das Zugelement (3) und das Klemmstück (4) mit einem Rastgesperre (6) versehen sind and über eine Keilführung (7) in Eingriff miteinander bringbar sind sowie über eine Löseeinrichtung (18) wieder lösbar sind, **dadurch gekennzeichnet, daß** zwischen dem Klemmgehäuse (2) und dem Klemmstück (4) im Bereich der Keilführung (7) eine Zwangsführung (5) vorgesehen ist, die das Klemmstück (4) zur Keilführung (7) hinlenkt, wobei die Zwangsführung (5) am Klemmgehäuse (2) relativ ortsfest angeordnet ist.

2. Seilzugeinstellung nach Anspruch 1, **dadurch gekennzeichnet, daß** die Zwangsführung (5) mindestens einen Führungsansatz (16) mit einer schrägen Leitfläche (17) und einen daran geführten Führungsstift (15) aufweist.

3. Seilzugeinstellung nach Anspruch 2, **dadurch gekennzeichnet, daß** der Führungsansatz (16) am Klemmgehäuse (2) und der Führungsstift (15) am Kopf (14) des Klemmstücks (4) angeordnet ist.

4. Seilzugeinstellung nach Anspruch 1 oder 2, **dadurch gekennzeichnet, daß** die schräge Leitfläche (17) sich im wesentlichen parallel zur Keilführung (7) erstreckt.

5. Seilzugeinstellung nach einem der Ansprüche 1 bis 4, **dadurch gekennzeichnet, daß** der Führungsstift (15) drehbar gelagert ist oder drehbare Teile aufweist.

6. Seilzugeinstellung nach einem der Ansprüche 1 bis 5, **dadurch gekennzeichnet, daß** die Löseeinrichtung einen relativ ortsfesten Anschlag (18) für das Klemmstück (4) und eine Feder (11) zwischen dem Klemmstück (4) und dem Klemmgehäuse (2) aufweist.

## Claims

1. Cable pull adjusting device comprising a movable clamping housing (2) which is connected to an actuating element (22) and in which a pull element (3), connected to at least one cable pull, and a clamping element (4) are guided in a movable manner, it being the case that the pull element (3) and the clamping element (4) are provided with a ratchet mechanism (6) and can be brought into engagement with one another via a wedge guide (7) and can be released again via a release device (18), **characterized in that** a restraint (5) is provided between the clamping housing (2) and the clamping element (4), in the region of the wedge guide (7), and directs the clamping element (4) towards the wedge guide (7), the restraint (5) being arranged in a relatively stationary manner on the clamping housing (2).

2. Cable pull adjusting device according to Claim 1, **characterized in that** the restraint (5) has at least one guide extension (16), with an oblique directing surface (17), and a guide pin (15) guided on said guide extension.

3. Cable pull adjusting device according to Claim 2, **characterized in that** the guide extension (16) is arranged on the clamping housing (2) and the guide pin (15) is arranged on the head (14) of the clamping element (4).

4. Cable pull adjusting device according to Claim 1 or 2, **characterized in that** the oblique directing surface (17) extends essentially parallel to the wedge guide (7).

5. Cable pull adjusting device according to one of Claims 1 to 4, **characterized in that** the guide pin (15) is mounted rotatably or has rotatable parts.

6. Cable pull adjusting device according to one of Claims 1 to 5, **characterized in that** the release device has a relatively stationary stop (18) for the clamping element (4) and a spring (11) between the clamping element (4) and the clamping housing (2).

## Revendications

1. Dispositif de réglage de câble constitué d'un boîtier (2) de serrage mobile, qui est relié à un organe (22) d'actionnement et dans lequel un élément (3) de traction relié à au moins un câble et une pièce (4) de serrage sont guidés avec possibilité de déplacement, I'élément (3) de traction et la pièce (4) de serrage étant munis d'un cliquet (6) et pouvant être mis en prise l'un avec l'autre par l'intermédiaire d'un dispositif (7) de guidage à coin et pouvant être mis hors de prise à nouveau par l'intermédiaire d'un dispositif (18) de désencliquetage, **caractérisé en ce qu'**il est prévu entre le boîtier (2) de serrage et la pièce (4) de serrage, dans la région du dispositif (7) de guidage à coin, un dispositif (5) de guidage forcé qui guide la pièce (4) de serrage vers le dispositif (7) de guidage à coin, le dispositif (5) de guidage forcé étant disposé relativement à poste fixe sur le boîtier (2) de serrage.

2. Dispositif de réglage de tirant à câble suivant la revendication 1, **caractérisé en ce que** le dispositif (5) de guidage forcé comporte au moins un prolongement (18) deguidage ayant une surface (17) de glissement en biais et une broche (15) de guidage qui y est guidée.

3. Dispositif de réglage de tirant à câble suivant la revendication 2, **caractérisé en ce que** le prolongement (16) de guidage est monté sur le boîtier (2) de serrage et la broche (15) de guidage est montée sur la tête de la pièce (4) de serrage.

4. Dispositif de réglage de tirant à câble suivant la revendication 1 ou 2, **caractérisé en ce que** la surface (17) de glissement en biais s'étend sensiblement parallèlement au dispositif (7) de guidagé à coin.

5. Dispositif de réglage de tirant à câble suivant l'une des revendications 1 à 4, **caractérisé en ce que** la broche (15) de guidage est montée tournante ou comporte des pièces tournantes.

6. Dispositif de réglage de tirant à câble suivant Tune des revendications 1 à 5, **caractérisé en ce que** le dispositif de désencliquetage comporte une butée (18) relativement à poste fixe pour la pièce (4) de serrage et un ressort (11) entre la pièce (4) de serrage et le boîtier (2) de serrage.
